# EUROPEAN PATENT SPECIFICATION

(11) **EP 2 642 488 B1**
(45) Date of publication and mention of the grant of the patent: **01.02.2017**
(21) Application number: 11873994.5
(22) Date of filing: 14.10.2011
(51) Int. Cl.: G21C 3/32, G21C 3/30, B01D 35/02

(54) **BOTTOM NOZZLE FILTER DEVICE AND DEBRIS-RESISTANT BOTTOM NOZZLE USING THE DEVICE**
BODENDÜSEN-FILTERVORRICHTUNG UND ABLAGERUNGSRESISTENTE BODENDÜSE MIT DIESER VORRICHTUNG
DISPOSITIF DE FILTRE DE BUSE INFÉRIEURE ET BUSE INFÉRIEURE RÉSISTANT AU DÉBRIS UTILISANT LE DISPOSITIF

(43) Date of publication of application: 25.09.2013
(73) Proprietor: China Nuclear Power Technology Research Institute, Shenzhen, Guangdong 518026 (CN); China Guangdong Nuclear Power Holding, Shenzhen Guangdong 518031 (CN)
(72) Inventor: YU, Wenchi, Shenzhen, Guangdong 518026 (CN); LI, Weicai, Shenzhen, Guangdong 518026 (CN); ZHOU, Yuemin, Shenzhen, Guangdong 518026 (CN); LV, Xianfeng, Shenzhen, Guangdong 518026 (CN); GUO, Yan, Shenzhen, Guangdong 518026 (CN); LIU, Yuli, Shenzhen, Guangdong 518026 (CN)
(74) Representative: Perani, Aurelio
(86) International application number: PCT/CN2011/080768
(87) International publication number: WO 2013/053128

(56) References cited:
- WO-A1-02/075746
- CN-A- 1 637 956
- CN-Y- 2 710 724
- US-A- 5 030 412
- US-A1- 2004 076 253
- US-A1- 2004 076 253
- US-A1- 2011 170 651

## Description

### FIELD OF THE INVENTION

The present invention relates to the nuclear reactor, and more particularly to a bottom nozzle filtering device and a debris-preventive bottom nozzle that can be used for the light water reactor (LWR) nuclear fuel assembly.

### BACKGROUND OF THE INVENTION

The light-water reactor nuclear power plant fuel assembly generally consists of a top nozzle, guide thimbles, fuel rods, grids, and a bottom nozzle. The grid is generally assembled with pre-formed strips to form a 17 × 17 lattice square grid assembly. There are 25 guide thimble tubes and one instrument tube placed in parallel in part of the grid assembly, and the grid separates the guide thimbles maintaining the spacing between the guide thimbles, thus constituting a skeleton structure. The skeleton is fixed at the upper and lower ends by the top and bottom nozzles, thus forming the basic structure of the fuel assembly. The fuel rods are arranged in parallel in the grid cells not occupied by the guide thimble. The coolant flows from the lower part of the bottom nozzle and through the fuel rod, slowing down the neutron and carrying away the fission energy, and flows out of the top nozzle. Because the coolant usually entrains the debris that is easy to be abraded the fuel rod, etc., there is a potential of safety hazard.

For filtering the debris in the coolant, some filtering techniques have appeared, such as the American patents US5283812, US7149272B2 and US5030412. For example, in the solution 1 of the first debris-filtering bottom nozzle, the main structure includes a debris-preventive plate and a bottom nozzle having a plate rib structure. The bottom nozzle is composed of four supporting legs and a connection plate. The debris-preventive plate is covered on the upper surface of the top nozzle for filtering the debris in the coolant, so as to prevent the debris abrading the fuel rod. In this solution, when the large and/or sharp debris (such as screws, nuts and metal cutting materials) impacts the debris-preventive plate at a high speed, the debris-preventive plate will be damaged, causing failure of the debris-preventive device of the fuel assembly, then causing the fuel rod to be abraded by the debris.

In the solution 2 of the second debris-filtering bottom nozzle, the debris-preventive device in the fuel assembly is provided with a bottom nozzle having the connection plate with a small circular hole and a debris-filtering bottom grid. The circular hole on the connection plate of the bottom nozzle filters the large debris, while the debris-preventive grid filters the remaining small debris. In this solution, decrease of the circulation sectional area at the inlet and outlet of the connection plate of the bottom nozzle causes unnecessary pressure loss. The pressure drop produced by the small-circular-hole bottom nozzle and the debris-preventive grid is obviously higher than that of the original solution 1.

In a third filtering device, the one piece stainless steel sheet is assembled into the connection plate of the bottom nozzle, and the flow path forms a deflected flow passage, thus the debris being filtered. In this solution, for increasing the debris filtering efficiency of the bottom nozzle, the gap clearance between the sheets must be small. Otherwise, the fluid has higher flow resistance due to increased wall surface friction contact.

In the above solutions of filtering the debris in the coolant, the problem still exists that either the debris-preventive plate is impacted/scratched by a sharp object, or the pressure drop is too high and the flowing resistance is higher.

### CONTENTS OF THE INVENTION

The present invention aim at to provide a bottom nozzle filtering device effectively filtering the debris and having a small pressure drop, and a debris-preventive bottom nozzle of LWR using this bottom nozzle filtering device.

Furthermore, the present invention can further provide a bottom nozzle filtering device that has small flowing resistance and can lodge and detain the debris in the coolant, as well as a debris-preventive bottom nozzle of LWR using this bottom nozzle filtering device.

The present invention provide a bottom nozzle filtering device, comprising: a plurality of successively spliced unit plates; a through flow channel is formed between the spliced adjacent unit plates;
the flow channel includes a plurality of spaced straight-section flow inlets, and a plurality of spaced straight-section flow outlets, as well as flow subchannels connecting with the straight-section of flow inlets and the straight-section of flow outlets; and
an outlet section of each of the straight-section flow inlets in the middle splits into two flow subchannels, respectively; the two flow subchannels communicate with adjacent two of the straight-section flow outlet, respectively; and an inlet section of each of the straight-section flow outlets in the middle combines with two flow subchannels, respectively.

In an embodiment of the invention, the straight-section flow inlet is a bag-shaped inlet.

In an embodiment of the invention, the straight-section flow inlet and the straight-section flow outlet are arranged in a staggered form at both sides of the flow subchannel.

In an embodiment of the invention, the straight-section flow inlet and the straight-section flow outlet are arranged just oppositely at both sides of the flow subchannel.

In an embodiment of the invention, the flow subchannel includes a plurality of coolant feed subchannels, a plurality of coolant drainage subchannels, and a plurality of converged channels; and
adjacent two of the coolant feed subchannels branching out from one of the straight-section flow inlets recombine with one of the converged channels at the same time; and the converged channels communicate with two of the fluid drainage subchannels at the same time, the two coolant drainage subchannels combining with the straight-section flow outlet just oppositely to the straight-section flow inlet at the same time.

In an embodiment of the invention, the flow subchannel includes two or more levels, each level of the flow subchannels including the coolant feed subchannels, the coolant drainage subchannels, and the converged channels; and
a plurality of middle converged channels are provided between the adjacent two levels of flow subchannels, thus the middle convergence channels communicating with the adjacent two coolant drainage subchannels and coolant feed subchannels.

In an embodiment of the invention, the unit plate is a metal plate having a scoop-like structure.

In an embodiment of the invention, the metal plate is made of stainless steel, austenitic nickel complex alloy or Inco nickel.

In an embodiment of the invention, the scoop-like structure of the adjacent unit plates includes an inlet groove and an outlet groove respectively provided at upper and lower sides of the unit plate, and a subchannel groove located at both sides of the inlet groove and communicating with adjacent two of the outlet grooves; and
after the unit plates are spliced, a hollow space pathway between the inlet grooves of adjacent two of the unit plates forms the straight-section flow inlet, a hollow space pathway between the outlet grooves of adjacent two of the unit plates forms the straight-section flow outlet, and a hollow space between the subchannel grooves of adjacent two of the unit plates forms the flow subchannels.

In an embodiment of the invention, the unit plate is provided at its edge with a low pressure drop structure, which includes one or more chamfered sections and/or an arc section formed at the edge of the unit plate.

In an embodiment of the invention, the unit plates are spliced to form a stereoscopic mesh structure, the straight-section flow inlet and the straight-section flow outlet of which are in the various shapes of diamond, square, circle or oval; and the unit plates are connected by brazing in the shape of a strip.

In accordance with the other aspect of the invention, provided a debris-preventive bottom nozzle for a light water reactor (LWR), comprising a connection plate and a support installed below the connection plate, wherein, the connection plate is further provided at its upper surface with the bottom nozzle filtering device according to any of the above embodiment.

In an embodiment of the invention, the bottom nozzle filtering device is provided at its upper and lower sides with a filtering rib simultaneously or respectively; the filtering rib partly blocks the straight-section flow inlet and/or the straight-section flow outlet.

A plurality of spaced straight-section flow inlets and spaced straight-section flow outlets are formed by splicing the unit plates, and the straight-section flow inlets and the straight-section flow outlets are communicated through the fluid subchannel, thus the flow direction of the coolant being controlled to prevent it from producing unnecessary eddies, making the pressure loss effectively controlled; after the large debris is filtered at the straight-section flow inlet and the straight-section flow outlet, the fluid enters the flow subchannel to be filtered again, thus enabling the debris to be filtered sufficiently.

Besides, the straight-section flow inlet, the straight-section flow outlet, and the separate flow subchannels allow the debris to be filtered in a staged and classified way, and further have the function of detaining the debris; moreover, the straight-section flow inlet and outlet are designed to be approximately circular, such that the flowing resistance can be lowered, avoiding such phenomena as sudden contraction and expansion; meanwhile, the low pressure drop design of the edge of the unit plate and the shunt design of the flow subchannel make the fluid reallocated and the pressure drop of the adjacent flow paths balanced; this pressure drop self-balancing measure is advantageous to avoiding the cross flow at the downstream caused by the local pressure drop, achieving the effect of controlling the unnecessary pressure loss.

### BRIEF DESCRIPTIONS OF THE DRAWINGS

The present invention will further be described below with reference to drawings and examples.
Fig. 1 is a schematic view of the debris-preventive bottom nozzle according to the present invention.
Fig. 2 is a partial schematic view of the unit plate of the first embodiment of the bottom nozzle filtering device according to the present invention.
Fig. 3 is a schematic view of the two unit plates of the first embodiment of the bottom nozzle filtering device according to the present invention after being spliced.
Fig. 4 is a schematic view of the flow path of the first embodiment of the bottom nozzle filtering device according to the present invention.
Fig. 5 is a schematic view of one form of the edge of the unit plate of the first embodiment of the bottom nozzle filtering device according to the present invention.
Fig. 6 is a schematic view of another form of the edge of the unit plate of the first embodiment of the bottom nozzle filtering device according to the present invention.
Fig. 7 is a schematic view of another form of the edge of the unit plate of the first embodiment of the bottom nozzle filtering device according to the present invention.
Fig. 8 is a schematic view of the flow path of the second embodiment of the bottom nozzle filtering device according to the present invention.
Fig. 9 is a schematic view of the flow path of the third embodiment of the bottom nozzle filtering device according to the present invention.
Fig. 10 is a schematic view of the flow path of the fourth embodiment of the bottom nozzle filtering device according to the present invention.
Fig. 11 is a schematic view of the flow path of the fifth embodiment of the bottom nozzle filtering device according to the present invention.
Fig. 12 is a schematic view of another form of the flow path of the fifth embodiment of the bottom nozzle filtering device according to the present invention.
Fig. 13 is a schematic view of the flow path of the sixth embodiment of the bottom nozzle filtering device according to the present invention.
Fig. 14 is a schematic view of the debris-preventive bottom nozzle according to the present invention with the addition of a filtering rib.

### DETAILED DESCRIPTION OF THE EMBODIMENTS

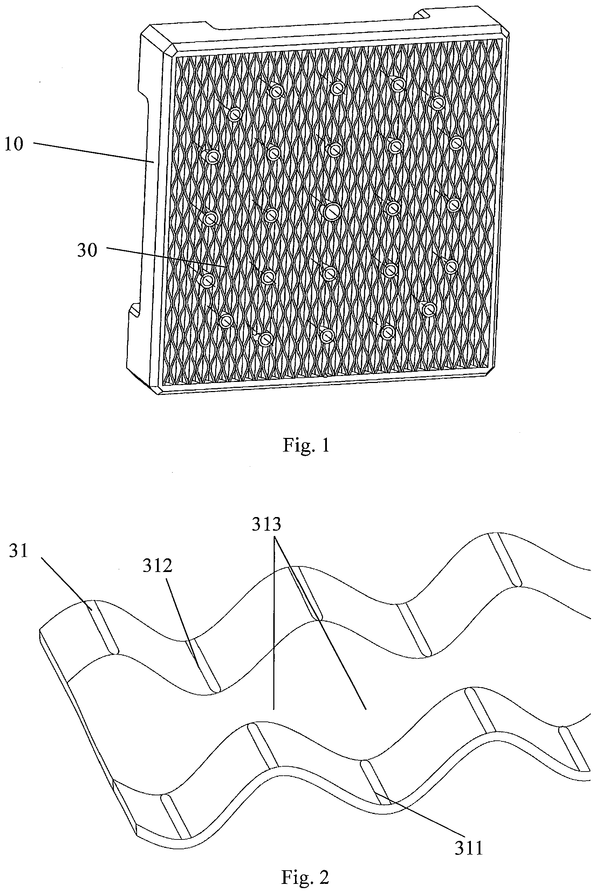

The first embodiment of the bottom nozzle filtering device of the present invention can be used in the debris-preventive bottom nozzle of LWR, as shown in Fig. 1. This debris-preventive bottom nozzle includes a connection plate 10, a support (not shown) installed below the connection plate 10, a bottom nozzle filtering device 30 provided on the upper surface of the connection plate 10, and so on. The debris in the coolant is filtered by the bottom nozzle filtering device 30, thus preventing the debris in the coolant from damaging the fuel rod, etc. to cause unnecessary accidents. Certainly, this bottom nozzle can further include other assemblies; however, the present invention does not relate to those assemblies, which will thus no further be discussed.

As shown in Fig. 2, this bottom nozzle filtering device 30 includes a plurality of successively spliced unit plates 31; a through flow channel formed between the spliced adjacent unit plates 31, enables the coolant to flow through and can be used to filter the debris in the coolant.

In this embodiment, the unit plate 31 is a metal plate having a scoop-like structure, which can be made of stainless steel, austenitic nickel-chromium alloys, Inconel or other suitable metals. When the two unit plates 31 are spliced, the edges of the scoop-like structure between the two unit plates 31 are connected by brazing, with the connecting zone in the shape of a strip. A plurality of unit plates 31 constitute a firm stereoscopic mesh structure after connection, the straight-section flow inlet and the straight-section flow outlet of which are in the shape of diamond, square, circle, oval or other forms; this mesh structure can significantly improve strength of the connection plate 10, avoiding the failure caused by impact of the high-speed debris.

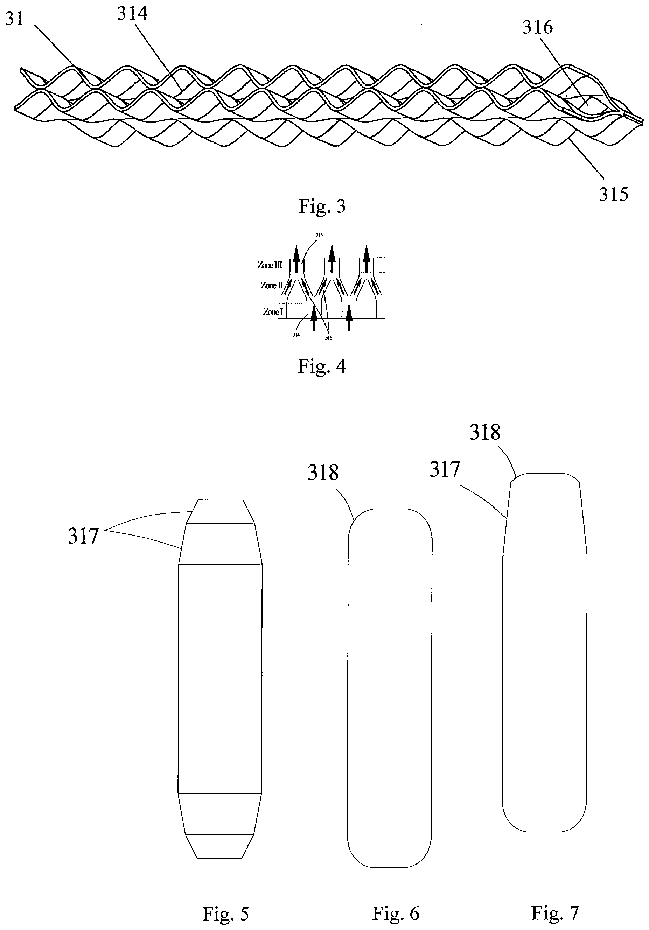

The scoop-like structure includes an inlet groove 311 and an outlet groove 312 respectively arranged in a staggered form at the upper and lower sides of the unit plate 31, and a subchannel groove 313 located at both sides of the inlet groove 311 and communicating with the adjacent two outlet grooves 312. As shown in Fig. 3, after the unit plates 31 are spliced, the hollow space between the inlet grooves 311 of the adjacent two unit plates 31 forms a straight-section flow inlet 314, the hollow space between the outlet grooves 312 of the adjacent two unit plates 31 forms a straight-section flow outlet 315, and the hollow space between the subchannel grooves 313 of the adjacent two unit plates 31 forms a flow subchannel 316.

This inlet groove 311 has an approximately circular scoop-shaped structure, making this straight-section flow inlet 314 form a bag-shaped inlet, thus enabling the debris in the coolant to be lodged and detained effectively, achieving effective filtering functions.

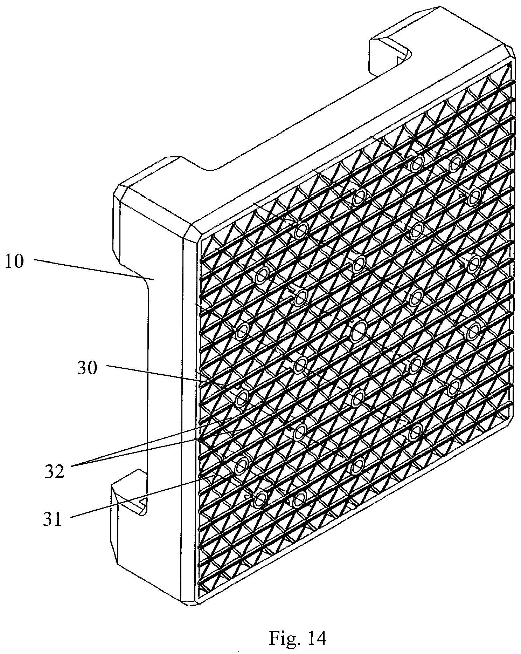

Furthermore, the bottom nozzle filtering device can be provided at its upper and lower sides with a filtering rib 32 simultaneously or respectively, as shown in Fig. 14. The filtering rib 32 partly blocks the straight-section flow inlet 314 and/or the straight-section flow outlet 315, thus subdividing the straight-section flow inlet 314 and/or the straight-section flow outlet 315, playing a role of strengthening the filtering effect.

As shown in Fig. 4, the straight-section flow inlets 314 are spaced side-by-side in Zone I, while the straight-section flow outlets 315 are spaced side-by-side in Zone III; the fluid subchannels 316 is arranged in Zone II, communicating the straight-section flow inlet 314 with the straight-section flow outlet 315. In this embodiment, this straight-section flow inlet 314 and the straight-section flow outlet 315 are arranged in a staggered form at the upper and lower sides of the unit plate 31, and the straight sections of the inlet and outlet control the flow direction of the coolant to prevent it from producing unnecessary eddies, making the pressure loss effectively controlled.

Two flows in subchannels 316 merge into one straight-section flow inlet 314, and merge respectively with adjacent two straight-section flow outlets 315, and thus the flow subchannel 316 has a flow deflection after the large debris is lodged at the straight-section flow inlet 314, making the fine debris in the coolant filtered again by the divided flow subchannel 316, with flow direction of the coolant as shown by the arrow in the drawing. The straight-section flow inlet 314 as shown in the drawing forms a smooth bag-shaped structure, having the function of catching and detaining the debris in the coolant, and the debris can be filtered in a segmented and classified way through the fluid subchannel 316, also realizing the function of detaining the debris. The debris is filtered in a segmented way, lowering the risk of clogging the filtering device after the debris is filtered all at once; and the debris lodged and detained in the bottom nozzle of the fuel assembly is discharged together with the fuel assembly, lowing the total amount of the debris in the coolant loop.

This straight-section flow inlet 314 is in the shape of near circle, making the flowing resistance lowered without such phenomena as flow sudden contraction and expansion. Besides, a low pressure drop structure can further be made at the edge of the unit plate 31. The low pressure drop structure can be one or more continuously chamfered sections 317 and/or an arc section 318 formed at the edge of the unit plate 31, as shown in Figs. 5-7, playing a role of lowering the flowing resistance of the flow.

Besides, in Zone II, i.e. the deflection zone of the flow subchannel 316, the fluid is reallocated, balancing the pressure drop of the adjacent flow paths; this pressure drop self-balancing measure is advantageous to controlling the cross flow at the downstream fuel assembly caused by the local pressure drop, achieving the effect of controlling the unnecessary pressure loss. Meanwhile, the straight-section flow outlet 315 adopts a straight flow path design, which minimizes the downstream flow turbulence.

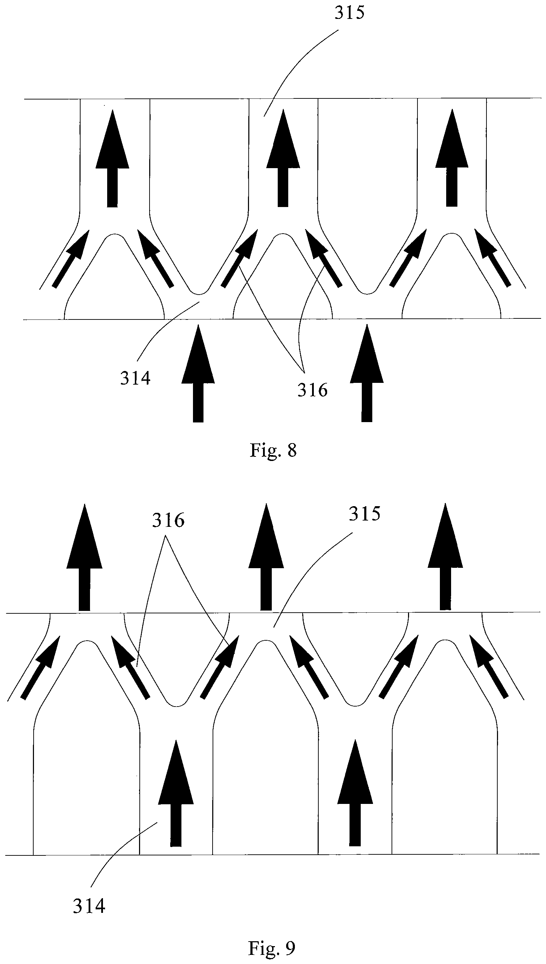

Fig. 8 shows a second embodiment of the bottom nozzle filtering device 30 of the present invention, which is different from the first embodiment in that the straight-section flow inlet 314 and the straight-section flow outlet 315 have different sizes. As shown in the drawing, the straight-section flow inlet 314 is shorter than the straight-section flow outlet 315, thus making the discharging flow more stable, avoiding unnecessary eddies, etc., effectively controlling the pressure loss.

Fig. 9 shows a third embodiment of the bottom nozzle filtering device 30 of the present invention, which is different from the first embodiment in that the straight-section flow inlet 314 and the straight-section flow outlet 315 have different sizes. As shown in the drawing, the straight-section flow inlet 314 is longer than the straight-section flow outlet 315, thus making the coolant stay at the straight-section flow inlet 314 for a longer time, more effectively filtering the debris in the coolant, improving the filtering effect.

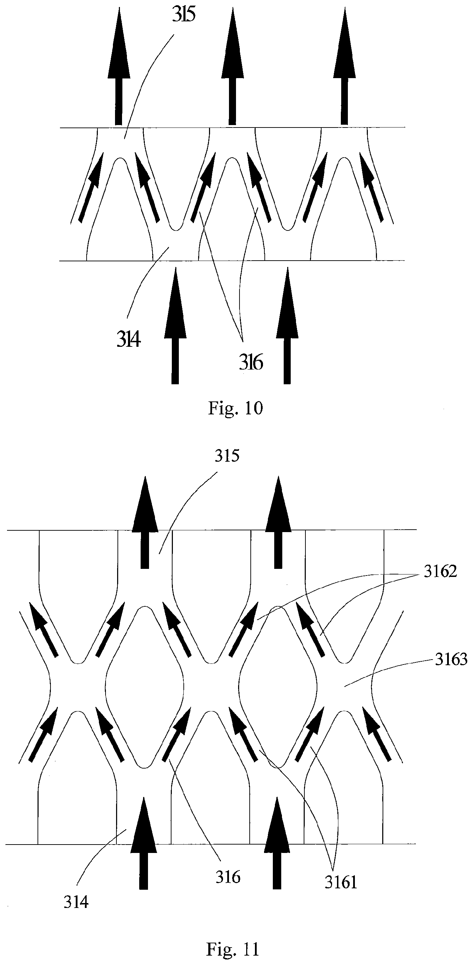

Fig. 10 shows a fourth embodiment of the bottom nozzle filtering device 30 of the present invention, which is different from the first embodiment in that the flow subchannel 316 has a different branching angle. As shown in the drawing, the flow subchannel 316 of this embodiment has a smaller branching angle, forming an angle about 10-20 degrees with respect to the incoming flow direction; that is, the fluid is swerved more gently, thus avoiding the problem of increased flow resistance caused by swerving.

Fig. 11 shows a fifth embodiment of the bottom nozzle filtering device 30 of the present invention, which is different from the first embodiment in that the straight-section flow inlet 314, the straight-section flow outlet 315 and the flow subchannel 316 are arranged at different positions, etc.. In this embodiment, the straight-section flow inlet 314 and the straight-section flow outlet 315 are arranged just oppositely at both sides of the flow subchannel 316. However, the flow subchannel 316 includes a plurality of coolant feed subchannels 3161, a plurality of coolant drainage subchannels 3162, and a plurality of converged channels 3162; that is, the flow subchannel 316 is divided into a plurality of levels, this embodiment including two levels.

As shown in the drawing, the adjacent two coolant feed subchannels 3161 merging with one straight-section flow inlet 314 merge with one converged channel 3162 at the same time; and the converged channel 3162 communicates with two coolant drainage subchannels 3162 at the same time, these two coolant drainage subchannels 3162 merging at the same time with the straight-section flow outlet 315 opposite to this straight-section flow inlet 314. Through the addition of the flow subchannel 316, the filtering capability of the flow subchannel 316 can be improved effectively, and the flow is better reallocated, balancing the pressure drop of the adjacent flow paths.

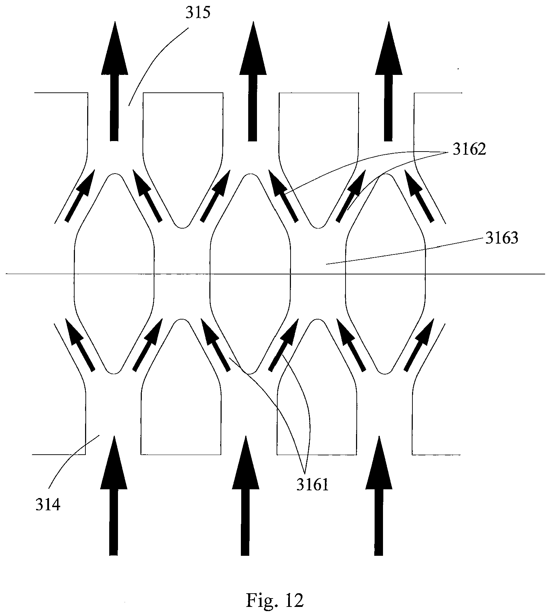

It can be comprehended that the shape of a plurality of the coolant feed subchannels 3161, a plurality of the coolant drainage subchannels 3162, and a plurality of the converged channels 3162 can be adjusted as required, as shown in Fig. 12.

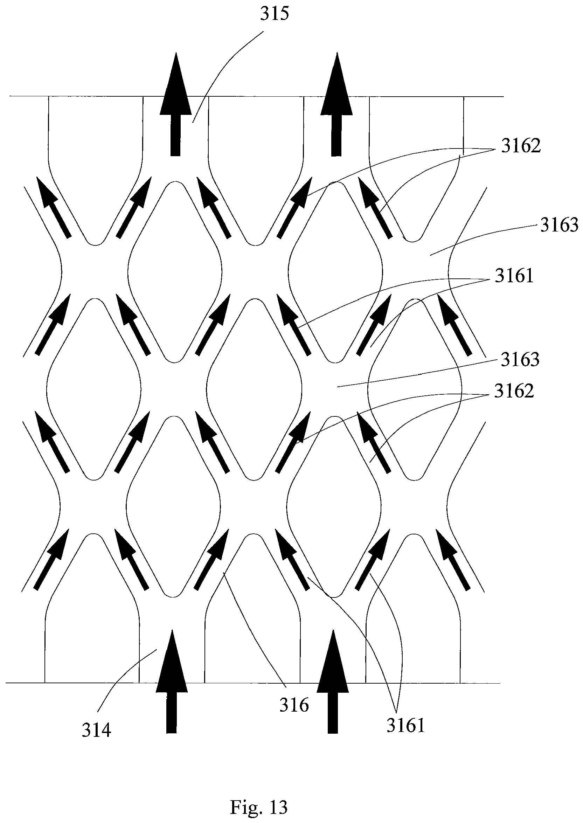

Fig. 13 shows a sixth embodiment of the bottom nozzle filtering device 30 of the present invention, which is different from the fourth embodiment in that this flow subchannel 316 includes a plurality of levels, each level of the flow subchannel 316 including the coolant feed subchannel 3161, the coolant drainage subchannel 3162, and the converged channel 3162; a plurality of middle converged channels 3162 are provided between the adjacent two levels of fluid subchannel 316, and the middle convergence channel 3162 merges with the adjacent coolant drainage subchannel 3162 and coolant feed subchannel 3161. Through addition of the number of the levels of the flow subchannel 316, the filtering capability of the flow subchannel 316 can further be improved, and the coolant is better reallocated, rearranged, self-balancing the pressure drop of the adjacent flow paths.

It can be comprehended that various technical features of each of the above embodiments can be combined with each other and interoperable without restriction.

## Claims

1. A bottom nozzle filtering (30) comprising:
a plurality of successively spliced unit plates (31) ; a through flow channel is formed between the spliced adjacent unit plates;
the flow channel includes a plurality of spaced straight-section flow inlets (314), and a plurality of spaced straight-section flow outlets (315), as well as flow subchannels (316) connecting with the straight-section of flow inlets and the straight-section of flow outlets; and
an outlet section of each of the straight-section flow inlets in the middle splits into two flow subchannels, respectively; the two flow subchannels communicate with adjacent two of the straight-section flow outlets, respectively; and an inlet section of each of the straight-section flow outlets in the middle combines with two flow subchannels, respectively.

2. The bottom nozzle filtering device according to claim 1, wherein, the straight-section flow inlet is a bag-shaped inlet.

3. The bottom nozzle filtering device according to claim 1, wherein, the straight-section flow inlets and the straight-section flow outlets are arranged in a staggered form at both sides of the flow subchannel.

4. The bottom nozzle filtering device according to claim 1, wherein, the straight-section flow inlets and the straight-section flow outlets are arranged just oppositely at both sides of the flow subchannels

5. The bottom nozzle filtering device according to claim 4, wherein, the flow subchannels include a plurality of coolant feed subchannels, a plurality of coolant drainage subchannels (3162), and a plurality of converged channels (3163); and
adjacent two of the coolant feed subchannels branching out from one of the straight-section flow inlets recombine with one of the converged channels at the same time; and the converged channels communicate with two of the fluid drainage subchannels at the same time, the two coolant drainage subchannels combining with the straight-section flow outlet just oppositely to the straight-section flow inlet at the same time.

6. The bottom nozzle filtering device according to claim 5, wherein, the flow subchannels include two or more levels, each level of the flow subchannels including the coolant feed subchannels (3161), the coolant drainage subchannels, and the converged channels; and
a plurality of middle converged channels are provided between the adjacent two levels of flow subchannels, thus the middle convergence channels communicating with the adjacent two coolant drainage subchannels and coolant feed subchannels.

7. The bottom nozzle filtering device according to claim 1, wherein, the unit plate is a metal plate having a scoop-like structure.

8. The bottom nozzle filtering device according to claim 7, wherein, the metal plate is made of stainless steel, austenitic nickel complex alloy or Inco nickel.

9. The bottom nozzle filtering device according to claim 7, wherein, the scoop-like structure of the adjacent unit plates includes an inlet groove and an outlet groove respectively provided at upper and lower sides of the unit plate, and a subchannel groove located at both sides of the inlet groove and communicating with adjacent two of the outlet grooves; and
after the unit plates are spliced, a hollow space pathway between the inlet grooves of adjacent two of the unit plates forms the straight-section flow inlet, a hollow space pathway between the outlet grooves of adjacent two of the unit plates forms the straight-section flow outlet, and a hollow space between the subchannel grooves of adjacent two of the unit plates forms the flow subchannels.

10. The bottom nozzle filtering device according to any of claims 1-9, wherein, the unit plate is provided at its edge with a low pressure drop structure, which includes one or more chamfered sections and/or an arc section formed at the edge of the unit plate.

11. The bottom nozzle filtering device according to any of claims 1-9, wherein, the unit plates are spliced to form a stereoscopic mesh structure, the straight-section flow inlet and the straight-section flow outlet of which are in the various shapes of diamond, square, circle or oval; and the unit plates are connected by brazing in the shape of a strip.

12. A debris-preventive bottom nozzle for a light water reactor (LWR), comprising a connection plate and a support installed below the connection plate, wherein, the connection plate is further provided at its upper surface with the bottom nozzle filtering device according to any of claims 1-10.

13. The debris-preventive bottom nozzle according to claim 12, wherein, the bottom nozzle filtering device is provided at its upper and lower sides with a filtering rib simultaneously or respectively; the filtering rib partly blocks the straight-section flow inlet and/or the straight-section flow outlet.

## Patentansprüche

1. Bodendüsen-Filtereinrichtung (30) umfassend:
mehrere nacheinander verspleißte Einheitsplatten (31);
einen Durchflusskanal wird zwischen den angrenzenden, verspleißten Einheitsplatten gebildet;
der Durchflusskanal umfasst mehrere beabstandete Strömungseinlässe (314) mit geradem Abschnitt und mehrere beabstandete Strömungsauslässe (315) mit geradem Abschnitt ebenso wie Strömungsunterkanäle (316), die sich mit den Strömungseinlässen mit geradem Abschnitt und den Strömungsauslässen mit geradem Abschnitt verbinden; und
ein Auslassabschnitt eines jeden Strömungseinlässes mit geradem Abschnitt teilt in der Mitte jeweils in zwei Strömungsunterkanäle; die zwei Strömungsunterkanäle stehen jeweils mit zwei angrenzenden Strömungsauslässen mit geradem Abschnitt in Verbindung; und ein Einlassabschnitt eines jeden Strömungsauslässes mit geradem Abschnitt verbindet sich in der Mitte jeweils mit zwei Strömungsunterkanälen.

2. Bodendüsen-Filtereinrichtung nach Anspruch 1, wobei der Strömungseinlass mit geradem Abschnitt ein sackförmiger Einlass ist.

3. Bodendüsen-Filtereinrichtung nach Anspruch 1, wobei die Strömungseinlässe mit geradem Abschnitt und die Strömungsauslässe mit geradem Abschnitt auf beiden Seiten des Strömungsunterkanals versetzt angeordnet sind.

4. Bodendüsen-Filtereinrichtung nach Anspruch 1, wobei die Strömungseinlässe mit geradem Abschnitt und die Strömungsauslässe mit geradem Abschnitt direkt gegenüber an beiden Seiten der Strömungsunterkanäle angeordnet sind.

5. Bodendüsen-Filtereinrichtung nach Anspruch 4, wobei die Strömungsunterkanäle mehrere Unterkanäle für die Kühlmittelzufuhr, mehrere Unterkanäle für die Kühlmittelableitung (3162) und mehrere konvergierende Kanäle (3163) aufweisen; und zwei aneinander angrenzende Strömungsunterkanäle für die Kühlmittelzufuhr, die von einem der Strömungseinlässe mit geradem Abschnitt abzweigen, verbinden sich gleichzeitig wieder mit einem der konvergierenden Kanäle; und die konvergierenden Kanäle stehen gleichzeitig mit zwei Unterkanälen für die Kühlmittelableitung in Verbindung, wobei die beiden Unterkanäle für die Kühlmittelableitung sich gleichzeitig mit dem Strömungsauslass mit geradem Abschnitt direkt gegenüber dem Strömungseinlass mit geradem Abschnitt verbinden.

6. Bodendüsen-Filtereinrichtung nach Anspruch 5, wobei die Strömungsunterkanäle zwei oder mehr Stufen aufweisen, wobei jede Stufe der Strömungsunterkanäle die Unterkanäle für die Kühlmittelzufuhr (3161), die Unterkanäle für die Kühlmittelableitung und die konvergierenden Kanäle umfasst; und mehrere in der Mitte konvergierende Kanäle sind zwischen den beiden angrenzenden Stufen der Strömungsunterkanäle vorgesehen, weshalb die in der Mitte konvergierenden Kanäle mit den beiden angrenzenden Unterkanälen für die Kühlmittelableitung und den Unterkanälen für die Kühlmittelzufuhr in Verbindung stehen.

7. Bodendüsen-Filtereinrichtung nach Anspruch 1, wobei die Einheitsplatte eine Metallplatte mit schaufelförmiger Struktur ist.

8. Bodendüsen-Filtereinrichtung nach Anspruch 7, wobei die Metallplatte aus Edelstahl, einer austenitischen Nickelkomplexlegierung oder Inco Nickel hergestellt ist.

9. Bodendüsen-Filtereinrichtung nach Anspruch 7, wobei die schaufelförmige Struktur der angrenzenden Einheitsplatten eine Einlassnut und eine Auslassnut aufweist, die jeweils auf der oberen und unteren Seite der Einheitsplatte vorgesehen sind, und eine Unterkanalnut, die auf beiden Seiten der Einlassnut angeordnet ist und mit den beiden angrenzenden Auslassnuten in Verbindung steht; und
nachdem die Einheitsplatten gespleißt sind, bildet ein Hohlraumdurchgang zwischen den Einlassnuten der beiden angrenzenden Einheitsplatten den Strömungseinlass mit geradem Abschnitt, ein Hohlraumdurchgang zwischen den Auslassnuten der beiden angrenzenden Einheitsplatten bildet den Strömungsauslass mit geradem Abschnitt und ein Hohlraumdurchgang zwischen den Unterkanalnuten der beiden angrenzenden Einheitsplatten bildet die Strömungsunterkanäle.

10. Bodendüsen-Filtereinrichtung nach einem beliebigen der Ansprüche 1 bis 9, wobei die Einheitsplatte an ihrer Kante mit einer Struktur mit niedrigem Druckverlust versehen ist, die ein oder mehrere gefaste Abschnitte und/oder einen an der Kante der Einheitsplatte gebildeten Bogenabschnitt versehen ist.

11. Bodendüsen-Filtereinrichtung nach einem beliebigen der Ansprüche 1 bis 9, wobei die Einheitsplatten gespleißt sind, um eine stereoskopische Gitterstruktur zu bilden, dessen Strömungseinlass mit geradem Abschnitt und Strömungsauslass mit geradem Abschnitt verschiedene Formen wie Raute, Viereck, Kreis oder Oval aufweisen; und die Einheitsplatten sind durch Löten in Form eines Streifens verbunden.

12. Teilchenzurückhaltende Bodendüse für einen Leichtwasserreaktor (LWR), umfassend eine Verbindungsplatte und eine unterhalb der Verbindungsplatte eingebaute Auflage, wobei die Verbindungsplatte ferner auf ihrer oberen Fläche mit der Bodendüsen-Filtereinrichtung nach einem beliebigen der Ansprüche von 1 bis 10 versehen ist.

13. Teilchenzurückhaltende Bodendüse nach Anspruch 12, wobei die Bodendüsen-Filtereinrichtung auf ihren oberen und unteren Seiten gleichzeitig bzw. jeweils mit einer Filterrippe versehen ist; die Filterrippe blockiert teilweise den Strömungseinlass mit geradem Abschnitt und/oder den Strömungsauslass mit geradem Abschnitt.

## Revendications

1. Dispositif de filtrage d'embout inférieur (30) comprenant: une pluralité de plaques unitaire successivement jointes (31) ; un canal d'écoulement traversant est formé entre les plaques unitaires adjacentes jointes ;
le canal d'écoulement comprend une pluralité d'orifices d'entrée d'écoulement de section droite espacés (314) et une pluralité d'orifices de sortie d'écoulement de section droite espacés (315), ainsi que des sous-canaux d'écoulement (316) se connectant avec la section droite d'orifices d'entrée d'écoulement et la section droite d'orifices de sortie d'écoulement ; et
une section de sortie de chacun des orifices d'entrée d'écoulement de section droite au milieu se divise en deux sous-canaux d'écoulement, respectivement ; les deux sous-canaux d'écoulement communiquent avec deux orifices adjacents des orifices de sortie d'écoulement de section droite, respectivement ; et une section d'entrée de chacun des orifices de sortie d'écoulement de section droite au milieu se combine avec deux sous-canaux d'écoulement, respectivement.

2. Dispositif de filtrage d'embout inférieur selon la revendication 1, dans lequel, l'orifice d'entrée d'écoulement de section droite est un orifice d'entrée en forme de poche.

3. Dispositif de filtrage d'embout inférieur selon la revendication 1, dans lequel, les orifices d'entrée d'écoulement de section droite et les orifices de sortie d'écoulement de section droite sont agencés sous une forme étagée des deux côtés du sous-canal d'écoulement.

4. Dispositif de filtrage d'embout inférieur selon la revendication 1, dans lequel, les orifices d'entrée d'écoulement de section droite et les orifices de sortie d'écoulement de section droite sont agencés juste les uns en face des autres des deux côtés des sous-canaux d'écoulement.

5. Dispositif de filtrage d'embout inférieur selon la revendication 4, dans lequel, les sous-canaux d'écoulement comprennent une pluralité de sous-canaux d'alimentation de réfrigérant, une pluralité de sous-canaux d'évacuation de réfrigérant (3162), et une pluralité de canaux convergents (3163) ; et
deux sous-canaux adjacents des sous-canaux d'alimentation de réfrigérant se ramifiant à partir d'un des orifices d'entrée d'écoulement de section droite se recombinent avec un des canaux convergents en même temps ; et les canaux convergents communiquent avec deux des sous-canaux d'évacuation de fluide en même temps, les deux sous-canaux d'évacuation de réfrigérant se combinant avec l'orifice de sortie d'écoulement de section droite juste en face de l'orifice d'entrée d'écoulement de section droite en même temps.

6. Dispositif de filtrage d'embout inférieur selon la revendication 5, dans lequel, les sous-canaux d'écoulement comprennent au moins deux ou plusieurs niveaux, chaque niveau adjacents des sous-canaux d'écoulement comprenant les sous-canaux d'alimentation de réfrigérant (3161), les sous-canaux d'évacuation de réfrigérant, et les canaux convergents ; et
une pluralité de canaux convergents centraux est disposée entre les deux niveaux de sous-canaux d'écoulement, les canaux de convergence centraux communiquant ainsi avec les deux sous-canaux d'évacuation de réfrigérant et sous-canaux d'alimentation de réfrigérant adjacents.

7. Dispositif de filtrage d'embout inférieur selon la revendication 1, dans lequel, la plaque unitaire est une plaque métallique ayant une structure de type pelle.

8. Dispositif de filtrage d'embout inférieur selon la revendication 7, dans lequel, la plaque métallique est réalisée en acier inoxydable, alliage complexe de nickel austénitique ou nickel d'Inco.

9. Dispositif de filtrage d'embout inférieur selon la revendication 7, dans lequel, la structure de type pelle des plaques unitaires adjacentes comprend une rainure d'entrée et une rainure de sortie disposées respectivement au niveau des côtés supérieur et inférieur de la plaque unitaire, et une rainure de sous-canal située des deux côtés de la rainure d'entrée et communiquant avec deux rainures adjacentes des rainures de sortie ; et
après que les plaques unitaires sont jointes, une voie d'espace creux entre les rainures d'entrée de deux plaques adjacentes des plaques unitaires forme l'orifice d'entrée d'écoulement de section droite, une voie d'espace creux entre les rainures de sortie de deux plaques adjacentes des plaques unitaires forme l'orifice de sortie d'écoulement de section droite, et un espace creux entre les rainures de sous-canal de deux plaques adjacentes des plaques unitaires forme les sous-canaux d'écoulement.

10. Dispositif de filtrage d'embout inférieur selon l'une quelconque des revendications 1 à 9, dans lequel, la plaque unitaire est munie au niveau de son bord d'une structure à faible chute de pression, qui comprend une ou plusieurs sections chanfreinée et/ou une section en arc formée au niveau du bord de la plaque unitaire.

11. Dispositif de filtrage d'embout inférieur selon l'une quelconque des revendications 1 à 9, dans lequel, les plaques unitaires sont jointes pour former une structure à maillage stéréoscopique, dont l'orifice d'entrée d'écoulement de section droite et l'orifice de sortie d'écoulement de section droite sont de diverses formes de losange, carré, cercle ou ovale ; et les plaques unitaires sont connectées par brasage sous la forme d'une bande.

12. Embout inférieur de prévention contre les débris pour un réacteur à eau légère (LWR), comprenant une plaque de connexion et un support installé au-dessous de la plaque de connexion, dans lequel, la plaque de connexion est munie en outre au niveau de sa surface supérieure d'un dispositif de filtrage d'embout inférieur selon l'une quelconque des revendications 1-10.

13. Embout inférieur de prévention contre les débris selon la revendication 12, dans lequel, le dispositif de filtrage d'embout inférieur est pourvu au niveau de ses côtés supérieur et inférieur d'une nervure filtrante, simultanément ou respectivement ; la nervure filtrante bloque partiellement l'orifice d'entrée d'écoulement de section droite et/ou l'orifice de sortie d'écoulement de section droite.
